# EUROPÄISCHE PATENTANMELDUNG

(11) **EP 2 455 189 A1**
(43) Veröffentlichungstag der Anmeldung: **23.05.2012**
(21) Anmeldenummer: 11001651.6
(22) Anmeldetag: 01.03.2011
(51) Int. Cl.: B24B 13/06, B24D 13/14

(54) **Vorrichtung und Verfahren zum Bearbeiten einer optischen Linse mit einer Erfassungseinrichtung für die Erfassung von Werkzeuginformationen und Werkzeug mit Informationsträger**

(30) Priorität: 17.11.2010 EP 10014693; 02.12.2010 EP 10015217
(71) Anmelder: Schneider GmbH & Co. KG, 35112 Fronhausen (DE)
(72) Erfinder: Schneider, Gunter, 35037 Marburg (DE)
(74) Vertreter: Gesthuysen, von Rohr & Eggert

(57) **Zusammenfassung**

Es werden eine Vorrichtung (1), ein Werkzeug (5) und ein Verfahren zum Bearbeiten, insbesondere Polieren, einer optischen Linse (2) mittels eines Werkzeugs (5) vorgeschlagen, wobei ein Informationsträger (14) auf einer Arbeitsfläche (50) des Werkzeugs (5) beim Bearbeiten der Linse (2) mit abgearbeitet wird, wodurch dieser entfernt bzw. unlesbar wird. Mittels einer Erfassungseinrichtung (13) können somit Rückschlüße über den Zustand des Werkzeugs (5) gezogen werden. In einem Ausführungsbeispiel ist der Informationsträger (14) ein Barcode. Der Erfassungseinrichtung (13) kann ein Werkzeugmagazin (12) zugeordnet sein.

## Beschreibung

Die vorliegende Erfindung betrifft eine Vorrichtung zum Bearbeiten, insbesondere Polieren, einer optischen Linse oder eines sonstigen optischen Bauteils gemäß dem Oberbegriff des Anspruchs 1, ein Werkzeug zum Bearbeiten, insbesondere Polieren, einer optischen Linse oder eines sonstigen optischen Bauteils gemäß dem Oberbegriff des Anspruchs 8 sowie ein Verfahren zum Bearbeiten, insbesondere Polieren, einer optischen Linse oder eines sonstigen optischen Bauteils.

Eine optische Linse, beispielsweise für eine Brille, soll bestimmte optische Eigenschaften aufweisen. Die damit einhergehenden gewünschten optischen Daten der Linse werden beispielsweise von einem Augenoptiker bestimmt. Die Linsen werden dann in Abhängigkeit von den jeweils gewünschten optischen Daten bearbeitet bzw. gefertigt, wobei die Linsen insbesondere mit so genannten Freiformflächen versehen werden (beispielsweise Gleitsichtgläser etc.). Die nachfolgende Beschreibung und die vorliegende Erfindung beziehen sich vorzugsweise auf solche Linsen bzw. Linsenrohlinge, die gemäß den gewünschten, individualisierten optischen Daten bearbeitet und insbesondere mit so genannten Freiformflächen versehen werden.

Die DE 10 2007 007 188 A1 offenbart ein Bearbeitungszentrum zum Bearbeiten einer optischen Linse aus Kunststoff. Dieses Bearbeitungszentrum weist eine um eine Rotationsachse rotierende Werkstückspindel mit einer Aufnahme für eine Linse auf Das Bearbeitungszentrum weist weiter eine Bearbeitungseinrichtung mit einem Fräswerkzeug, eine Bearbeitungseinrichtung mit einem Drehwerkzeug und eine Poliereinrichtung mit einem Polierwerkzeug auf. Die Werkstückspindel ist in Richtung der Rotationsachse und quer dazu bewegbar, um die Linse den verschiedenen Einrichtungen zuzuführen und die verschiedenen Bearbeitungen zu ermöglichen und dabei insbesondere die gewünschten Freiformflächen an den Linsen zu erzeugen.

Die DE 10 2007 042 667 A1 zeigt eine Poliereinrichtung für optische Linsen. Hier erfolgt ein Bearbeiten durch Polieren der Linsen. Als Bearbeitungswerkzeuge werden Polierwerkzeuge eingesetzt.

Bei der Bearbeitung von optischen Linsen oder sonstigen optischen Bauteilen ist eine weitgehende Automatisierung wünschenswert und/oder eine weitgehende Überwachung der eingesetzten Betriebsmittel bzw. Werkzeuge wünschenswert oder sinnvoll,

Der vorliegenden Erfindung liegt die Aufgabe zugrunde, eine Vorrichtung, ein Werkzeug und ein Verfahren zum Bearbeiten einer optischen Linse oder eines sonstigen optischen Bauteils anzugeben, wobei eine Bearbeitung mit geringem Aufwand und/oder durch ungeschultes Personal erfolgen kann und/oder wobei eine automatisierte Bearbeitung und/oder Überwachung ermöglicht oder erleichtert wird.

Die obige Aufgabe wird durch eine Vorrichtung gemäß Anspruch 1, durch ein Werkzeug gemäß Anspruch 8 oder durch ein Verfahren gemäß Anspruch 12 gelöst. Vorteilhafte Weiterbildungen sind Gegenstand der Unteransprüche.

Ein Aspekt der vorliegenden Erfindung liegt darin, dass die Vorrichtung eine Erfassungseinrichtung zum Erfassen mindestens eines Betriebsmittels für die Bearbeitung der Linse aufweist. Bei dem Betriebsmittel handelt es sich insbesondere um ein Werkzeug. Insbesondere umfasst das Erfassen des Betriebsmittels ein Identifizieren des Betriebsmittels oder Werkzeugs und/oder ein Erfassen von Daten oder Informationen des Betriebsmittels oder Werkzeugs und/oder ein Erfassen des Zustands des Betriebsmittels oder Werkzeugs. Dies vereinfacht oder erleichtert die Benutzung und Bedienung wesentlich, insbesondere so dass auch ungeschultes Personal eingesetzt werden kann und/oder Fehlbedienungen bzw. -benutzungen vermieden oder zumindest minimiert werden können und/oder so dass eine automatisierte Steuerung, Bearbeitung und/oder Überwachung ermöglicht oder erleichtert wird.

Vorzugsweise erfolgt das Erfassen mindestens eines Betriebsmittels oder Werkzeugs selbsttätig, insbesondere über mindestens einen oder mehrere entsprechende Detektoreinrichtungen. Jedoch kann auch ein teilweise manuelles Erfassen erfolgen, beispielsweise durch manuelles Vorbeibewegen eines zu erfassenden Werkzeugs an einer Detektoreinrichtung, wie einem Sensor oder Lesekopf Dies vereinfacht oder erleichtert die Benutzung und Bedienung der Vorrichtung zur Bearbeitung der Linse wesentlich, insbesondere so dass auch ungeschultes Personal eingesetzt werden kann und/oder Fehlbedienungen bzw. -benutzungen vermieden oder zumindest minimiert werden können.

Die Erfassungseinrichtung und/oder mindestens eine Detektoreinrichtung ist bzw. sind vorzugsweise in die Vorrichtung integriert.

Vorzugsweise weist die Vorrichtung auch eine Benutzerführeinrichtung zur Benutzerführung aufweist, Dies erleichtert die Benutzung der Vorrichtung und damit das Bearbeiten der optischen Linse. Insbesondere kann so der Aufwand verringert werden und/oder eine Bearbeitung gegebenenfalls auch durch ungeschultes Personal erfolgen.

Insbesondere wird ein für eine gewünschte Bearbeitung benötigtes oder auszutaschendes Betriebsmittel, wie ein Werkzeug, vorzugsweise von der Benutzerführung bzw. Benutzerführeinrichtung angezeigt. Dies vereinfacht oder erleichtert die Benutzung und Bedienung der Vorrichtung zur Bearbeitung der Linse wesentlich, insbesondere so dass auch ungeschultes Personal eingesetzt werden kann und/oder Fehlbedienungen bzw. -benutzungen vermieden oder zumindest minimiert werden können.

Besonders bevorzugt werden für die Bearbeitung erforderliche, auszutauschende, zu ändernde oder nachzufüllende Betriebsmittel erfasst und/oder angezeigt. Dies vereinfacht oder erleichtert die Benutzung und Bedienung der Vorrichtung zur Bearbeitung der Linse wesentlich, insbesondere so dass auch ungeschultes Personal eingesetzt werden kann und/oder Fehlbedienungen bzw. -benutzungen vermieden oder zumindest minimiert werden können.

Besonders bevorzugt ist die Vorrichtung bzw. Benutzerführung bzw. Benutzerführeinrichtung derart ausgebildet, dass der Zustand und/oder Bearbeitungsfortschritt einem Benutzer angezeigt oder auf sonstige Art und Weise mitgeteilt wird oder werden kann, insbesondere können hierbei auch die Zustände oder Bearbeitungsfortschritte einzelner Bearbeitungseinrichtungen der Vorrichtung und/oder für einzelne Linsen je nach Bedarf angezeigt oder mitgeteilt werden. Die Ausgabe bzw. Anzeige erfolgt insbesondere über eine entsprechende Anzeigeinrichtung, eine Schnittstelle o.dgl. Zur Erfassung der Zustände können hierzu entsprechende Zustandsinformationen oder sonstige Informationen ausgetauscht werden und/oder beispielsweise mittels der Erfassungseinrichtung bzw. mittels Detektoreinrichtungen o.dgl. erfasst werden.

Die vorliegende Erfindung bezieht sich primär auf das Bearbeiten, insbesondere Polieren, einer optischen Linse, erstreckt sich vorzugsweise aber generell auch auf das Bearbeiten, insbesondere Polieren, von (sonstigen) optischen Bauteilen. Die vorliegende Beschreibung gilt daher vorzugsweise entsprechend auch für die Bearbeitung von sonstigen optischen Bauteilen.

Unter "Bearbeitungseinrichtung" wird im Rahmen der vorliegenden Erfindung generell jede Einrichtung verstanden, die eine Bearbeitung der Linse leistet bzw. gestattet. Insoweit umfasst der Begriff "Bearbeitungseinrichtung" auch eine Poliereinrichtung. Im Speziellen gibt es aber auch die Begrifflichkeit "Bearbeitungseinrichtung zum spannen oder sonstigen formgebenden Bearbeiten der Linse". Hierbei handelt es sich insbesondere um die oben angegebenen speziellen Bearbeitungseinrichtungen mit einem Fräswerkzeug, mit einem Drehwerkzeug oder mit einem anderen formgebenden Bearbeitungswerkzeug.

Der teilweise verwendete Begriff "Informationen" umfasst erfingdungsgemäß vorzugsweise Daten zu mindestens einem oder dem erFassten Betriebsmittel oder Werkzeug. Diese Informationen oder Teile davon sind vorzugsweise in einem vorzugsweise am Werkzeug angeordneten Informationsträger gespeichert oder enthalten. Bei dem Informationsträger kann es sich insbesondere um einen sogenannten RFID-Transponder (Chip oder Einrichtung zur Identifizierung mit Hilfe elektromagnetischer Wellen, abgeleitet aus dem englischen Begriff "Radio-Frequency-Identification"), oder um eine optische Kennzeichnung, wie einen sogenannten Barcode (Strichcode), insbesondere einen 2D-Barcode (zweidimensionalen Barcode) handeln oder enthalten.

Vorzugsweise weist die Vorrichtung eine Eingabeeinrichtung und/oder eine Anzeigeeinrichtung, insbesondere in Form eines Dialogfeldes bzw. eines Bildschirms, möglicherweise ausgestattet als Touch-Screen, auf. Mittels der Benutzer- oder Menüführung kann ein Benutzer die Vorrichtung vorzugsweise über das Bedienfeld auf einfache Weise insbesondere ohne besondere Schulung bedienen und/oder können Fehlbedienungen minimiert oder vermieden werden.

Insbesondere weist die vorschlagsgemäße Vorrichtung ein gemeinsames Gehäuse für mindestens eine Bearbeitungseinrichtung der Vorrichtung sowie für sonstige optionale Einrichtungen zum Polieren, Reinigen, Markieren und/oder Blocken auf. Dies gestattet einen besonders kompakten und/oder kostengünstigen Aufbau und/oder eine Vereinfachung des Aufwands, der Steuerung und/oder der Bedienung. Weiter können so ansonsten erforderliche externe Schnittstellen zur Übertragung von Daten bzw. Weitergabe von Informationen minimiert oder ganz vermieden werden.

Besonders bevorzugt ist die Steuereinrichtung, Eingabeeinrichtung und/oder Erfassungseinrichtung in die Vorrichtung integriert oder fest mit dieser verbunden. Das entspricht dem bevorzugten Gestaltungsprinzip des vorschlagsgemäßen kompakten Bearbeitungszentrums, Jedoch kann die Steuereinrichtung, Eingabeeinrichtung und/oder Erfassungseinrichtung auch als separate, insbesondere unmittelbar mit der Vorrichtung verbindbare Komponente oder Bauteil ausgeführt sein, die dann aber vorzugsweise dezidiert für die Vorrichtung ausgebildet und mit dieser sehr einfach, insbesondere ausschließlich, verbindbar ist oder sind.

Von besonderem Vorteil ist eine Ausgestaltung der Vorrichtung, bei der die Linse bzw. der Linsenrohling, insbesondere aufgeblockt auf einem Blockstück, manuell in die Bearbeitungseinrichtung und/oder Poliereinrichtung einsetzbar bzw. einspannbar und aus dieser wieder entnehmbar ist,

Ein vorschlagsgemäßes Werkzeug zum Bearbeiten, insbesondere Polieren, einer optischen Linse oder eines sonstigen optischen Bauteils zeichnet sich dadurch aus, dass das Werkzeug einen Informationsträger zur Identifikation und/oder Anzeige des Zustands des Werkzeugs aufweist. Besonders bevorzugt enthält der Informationsträger Informationen zur Identifizierung des Werkzeugs, wobei diese Identifizierung insbesondere eine Erfassung oder Bestimmung von Parametern und/oder Eigenschaften des Werkzeugs umfasst oder ermöglicht. Der Informationsträger und insbesondere dessen Informationen sind vorzugsweise mittels der Erfassungseinrichtung, insbesondere mittels einer Kamera, erfassbar oder lesbar. So wird insbesondere eine Überwachung und/oder Automatisierung der Bearbeitung und/oder Überwachung ermöglicht oder erleichtert.

Alternativ oder zusätzlich wird insbesondere auch eine Überwachung des Zustands des Werkzeugs ermöglicht. Beispielsweise kann der Informationsträger den Zustand des Werkzeugs dadurch anzeigen, ob der Informationsträger oder einzelne Informationen noch erfassbar bzw. lesbar ist oder sind und/oder dass der Informationsträger durch die Bearbeitung bzw. während der Bearbeitung (mit) abgearbeitet wird. Hierzu ist der Informationsträger vorzugsweise auf einer Arbeitsfläche, insbesondere einer Polierfläche, des Werkzeugs angeordnet. Bei der Arbeitsfläche handelt es sich insbesondere um eine Fläche des Werkzeugs, die während der Bearbeitung verschleißt bzw, abgearbeitet wird und/oder mit dem Werkstück in Kontakt tritt.

Ein vorschlagsgemäßes Verfahren zum Bearbeiten, insbesondere Polieren, einer optischen Linse oder eines sonstigen Bauteils zeichnet sich gemäß einem Aspekt dadurch aus, dass ein Informationsträger des Werkzeugs beim Bearbeiten abgearbeitet und dadurch bzw. durch die damit einhergehende zumindest partielle Nichtlesbarkeit oder Entfernung des Informationsträgers oder von Informationen der Zustand des Werkzeugs angezeigt wird. Dies ermöglicht eine sehr einfache, kostengünstige Realisierung und/oder Überwachung des Zustands des Werkzeugs. So kann insbesondere eine verbesserte Kontrolle der Qualität der Werkzeuge und damit der Bearbeitung sehr einfach realisiert werden.

Gemäß einem weiteren Aspekt der vorliegenden Erfindung zeichnet sich ein vorschlagsgemäßes Verfahren zum Bearbeiten, insbesondere Polieren, einer optischen Linse oder sonstigen Bauteils dadurch aus, dass mehrere Werkzeuge in einem Magazin zur wahlweisen Benutzung bei der Bearbeitung bereitgehalten werden und ein benutztes Werkzeug wieder an der gleichen Position im Magazin zur Erleichterung der Identifikation des Werkzeugs abgelegt wird. So ist es insbesondere möglich, nur eine anfängliche Identifikation des Werkzeugs, beispielsweise über einen Informationsträger o.dgl, vorzunehmen und anschließend das Werkzeug über seine Position im Magazin zu identifizieren. Der Informationsträger kann dann insbesondere dazu verwendet werden, den Zustand des Werkzeugs anzuzeigen, besonders bevorzugt dadurch, dass der Informationsträger bei entsprechender Benutzung des Werkzeugs abgearbeitet wird. Der Abarbeitungszustand des Informationsträgers stellt dann eine Indikation bzw. Anzeige des Zustands des Werkzeugs dar. Dies ermöglicht oder erleichtert eine einfache, kostengünstige Identifikation von Werkzeugen und insbesondere auch eine Überwachung des Zustands von Werkzeugen.

Einzelne der vorgenannten und nachfolgenden Aspekte und Merkmale der vorliegenden Erfindung können beliebig miteinander kombiniert, aber auch unabhängig voneinander realisiert werden.

Weitere Aspekte, Merkmale, Vorteile und Eigenschaften der vorliegenden Erfindung ergeben sich aus den Ansprüchen und der nachfolgenden Beschreibung eines bevorzugten Ausführungsbeispiels anhand der Zeichnung. Es zeigt;
- Fig. 1: einen schematischen Aufbau einer vorschlagsgemäßen Vorrichtung;
- Fig. 2: eine schematische, schnittartige Ansicht eines Transportbehältnisses für eine oder mehrere Linsen und Werkzeuge mit einem Informationsträger für die Vorrichtung;
- Fig, 3: einen schematischen Aufbau der vorschlagsgemäßen Vorrichtung, wobei als Bearbeitungseinrichtung eine Poliereinrichtung und ein zugeordnetes Magazin als Aufnahmeeinrichtung für Werkzeuge dargestellt sind;
- Fig. 4: eine schematische Seitenansicht eines vorschlagsgemäßen Werkzeugs; und
- Fig. 5: eine Draufsicht des Werkzeugs gemäß Fig. 3.

In den Figuren werden für gleiche oder gleichartige Komponenten und Einrichtungen die gleichen Bezugszeichen verwendet, wobei sich die gleichen oder entsprechenden Vorteile und Eigenschaften ergeben, auch wenn eine wiederholte Beschreibung weggelassen ist.

Gegenstand der Erfindung ist eine Vorrichtung 1 zum Bearbeiten einer optischen Linse 2 oder eines sonstigen optischen Bauteils, auch wenn nachfolgend immer nur von Linsen als bevorzugtem Werkstück gesprochen wird. Für den technologischen Hintergrund einer solchen Vorrichtung darf zunächst auf die Beschreibungseinleitung verwiesen werden.

Die Linse 2 besteht vorzugsweise aus Kunststoff. Jedoch kann grundsätzlich auch ein sonstiger in geeigneter Weise zu bearbeitender Werkstoff, ggf. auch Glas bzw. Mineralglas, verwendet werden. Wenn die fertige Linse 2 für eine Brille (nicht dargestellt) eingesetzt bzw. verwendet werden soll, was vorzugsweise der Fall ist, wird die Linse 2 bei der vorliegenden Erfindung auch als Brillenglas bezeichnet, selbst wenn die Linse 2 gegebenenfalls nicht aus Glas besteht,

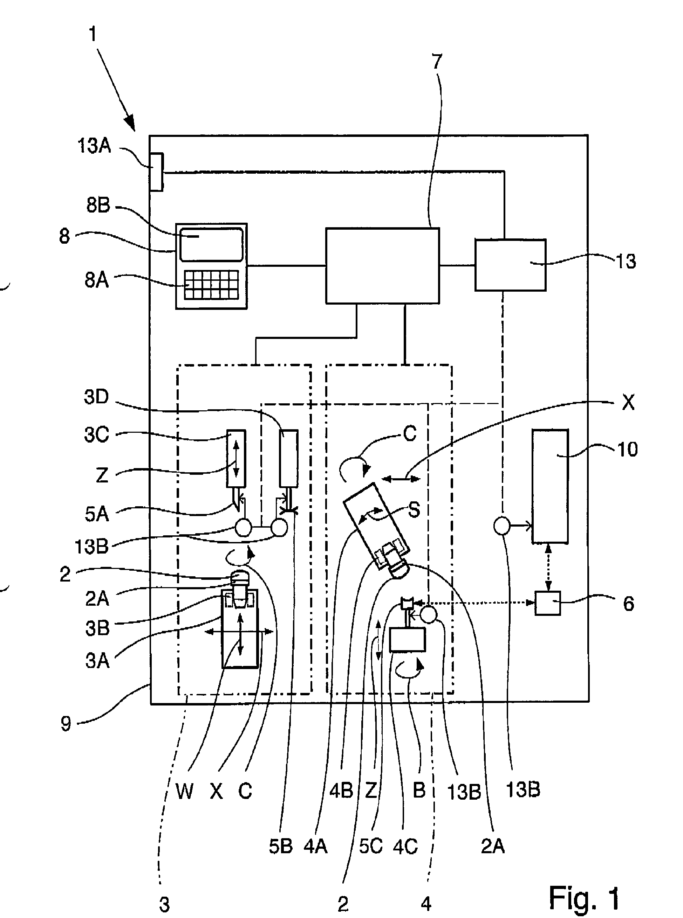

Die erfindungsgemäße Vorrichtung 1 weist mindestens oder ausschließlich eine Bearbeitungseinrichtung 3 zum spanenden oder sonstigen formgebenden Bearbeiten der Linse 2 als zu bearbeitendes Werkstück auf. Diese Bearbeitungseinrichtung 3 ist in Fig. 1 nur schematisch angedeutet.

Im dargestellten und bevorzugten Ausführungsbeispiel weist die Bearbeitungseinrichtung 3 vorzugsweise eine Werkstückspindel 3A auf, die vorzugsweise in eine W-Richtung und X-Richtung verfahrbar ist, insbesondere mittels eines Kreuzschlittens, der nur angedeutet ist. Die beiden Richtungen W, X verlaufen vorzugsweise quer oder senkrecht zueinander.

Bei der Werkstückspindel 3A handelt es sich insbesondere um eine vorzugsweise direkt angetriebene, präzise gelagerte Welle bzw. einen Direktantrieb oder einen sonstigen Antrieb jeweils mit vorzugsweise integrierter oder zugeordneter Schnittstelle oder Aufnahme 3B für das Werkstück, hier also für die Linse 2 bzw. den Linsenrohling. Grundsätzlich kann eine direkte Aufnahme bzw. Einspannung der Linse 2 erfolgen. Vorzugsweise wird die Linse 2 bzw. der Linsenrohling jedoch mittelbar über einen Halter, insbesondere ein sogenanntes Blockstück 2A, gehalten. Das Blockstück 2A wird dann eingespannt. Die Linse 2 ist temporär mit dem Blockstück 2A verbunden. Dieser mit dem Blockstück 2A verbundene Zustand wird als "geblockt" oder "aufgeblockt" bezeichnet. Das Blocken, also temporäre Befestigen, der Linse 2 am Blockstück 2A kann beispielsweise durch eine vorzugsweise bei niedriger Temperatur schmelzende Legierung, wie sogenanntes Alloy-Blockmaterial, ein Harz, ein Wachs, einen Klebstoff, einen Kunststoff, einen Klebestreifen o. dgl. erfolgen und ist aus dem Stand der Technik hinlänglich bekannt.

Die Werkstückspindel 3A weist beim Darstellungsbeispiel vorzugsweise die Aufnahme 3B, insbesondere eine Spannzange, für das Blockstück 2A auf.

Das Einspannen der Linse 2 bzw. des Blockstücks 2A an der Werkstückspindel 3A bzw. Aufnahme 3B erfolgt vorzugsweise von Hand, also manuell durch einen nicht dargestellten Bediener. Jedoch ist grundsätzlich auch ein automatisiertes Einspannen möglich.

Die Linse 2 bzw. das Blockstück 2A ist bzw. sind vorzugsweise in einer bestimmten axialen Lage und/oder Drehlage einspannbar, um die Linse 2 definiert bearbeiten zu können. Hierzu kann das Blockstück 2A auch mehrteilig aufgebaut sein, wie insbesondere aus dem Stand der Technik bekannt.

Mittels der Werkstückspindel 3A ist die eingespannte Linse 2 zur Bearbeitung in Drehung bzw. Rotation versetzbar. Die Werkstückspindel 3A bildet also insbesondere einen Antrieb zum Drehen bzw. Rotieren der Linse 2. Die Werkstückspindel 3A bildet insbesondere eine gerechnete oder gesteuerte Rundachse C. Insbesondere erfolgt eine CNC-Steuerung der Werkstückspindel 3A bzw. der Rotation der Linse 2. Besonders bevorzugt ist die Linse 2 gesteuert oder geregelt mit einer bestimmten Drehzahl und/oder mit einer definierten Drehlage in Drehung bzw. Rotation versetzbar.

Im dargestellten Ausführungsbeispiel ist die Werkstückspindel 3A mit dem eingespannten bzw. aufgeblockten Linsenrohling 2 vorzugsweise in W-Richtung zu einem Bearbeitungswerkzeug 5 zustellbar bzw. positionierbar und/oder in X-Richtung quer zur Zustellrichtung (Quervorschub) bewegbar bzw. verfahrbar. Insbesondere werden eine gesteuerte W-Achse und X-Achse bzw. Linearachsen gebildet. Grundsätzlich sind auch andere oder zusätzliche Richtungen und/oder Bewegungsachsen möglich. Insbesondere kann die axiale Ausrichtung der Dreh- bzw. Rundachse C der Werkstückspindel 3A auch schräg zur W-Richtung oder zur X-Richtung verlaufen.

Die Bearbeitungseinrichtung 3 ist vorzugsweise zum Bearbeiten der Linse 2 durch Drehen, insbesondere Stirndrehen, und/oder Fräsen ausgebildet. Jedoch kann die Bearbeitungseinrichtung 3 alternativ oder zusätzlich auch ein sonstiges, insbesondere spannendes oder formgebendes Bearbeiten der Linse 2 ermöglichen.

Beim Darstellungsbeispiel weist die Bearbeitungsvorrichtung 1 vorzugsweise einen Antrieb 3C mit einem Drehwerkzeug 5A und/oder einen Fräsantrieb 3D mit einem Fräswerkzeug 5B auf, Hier ist als Bearbeitungswerkzeug 5, insbesondere also ein Drehwerkzeug 5A bzw. Fräswerkzeug 5B, vorgesehen.

Die Linse 2 und das jeweilige Bearbeitungswerkzeug 5 sind vorzugsweise relativ zueinander zustellbar und/oder bewegbar, um die jeweilige Bearbeitung zu ermöglichen.

Vorzugsweise handelt es sich bei dem Antrieb 3C um einen komplexen, vorzugsweise elektrisch arbeitenden Achsantrieb, wie einen Tauchspulenantrieb, o. dgl., insbesondere um einen sogenannten Fast-Tool-Antrieb, um das Drehwerkzeug 5A insbesondere in Abhängigkeit von der Drehlage der Linse 2 und/oder in Abhängigkeit des Abstands des Werkzeugs 5 von der Drehachse der Werkstücksspindel 3A in seiner Axiallage bzw. Z-Achse zu steuern bzw. schnell vor- und zurückzubewegen. Der Antrieb 3C gestattet eine vorzugsweise lineare und/oder gesteuerte bzw. geregelte Bewegung des zugeordneten Werkzeugs 5 und bildet daher vorzugsweise eine gesteuerte Z-Achse.

Die Richtung der Z-Achse einerseits und die Richtung der W-Achse bzw, die axiale Ausrichtung der Dreh- bzw. Rundachse C andererseits können parallel zueinander oder geneigt zueinander verlaufen und/oder zueinander einstellbar sein. Bei einer relativen Neigung ist diese vorzugsweise derart gering, dass das bevorzugte Stirndrehen zur Bearbeitung des Werkstücks bzw. der Linse 2 in gewünschter bzw. erforderlicher Weise noch erfolgen kann.

Der Begriff "Achse" wird bei der vorliegenden Erfindung besonders bevorzugt im Sinne der Terminologie bei CNC-Steuerungen (numerischen bzw. rechnergestützten Steuerungen) als eine gesteuerte oder geregelte bzw, gerechnete Bewegungsachse, wie eine Linearachse oder Rundachse, verstanden. Dies gilt insbesondere für einzelne oder alle Teile einer Bearbeitungseinrichtung und/oder mehrere Bearbeitungseinrichtungen bzw. für die vorschlagsgemäße Vorrichtung 1 insgesamt.

Das Fräswerkzeug 5B und der zugeordnete Antrieb 3D sind in Fig. 1 nur schematisch angedeutet, Die Ausrichtung der Rotations- bzw. Drehachse des Antriebs 3D bzw. Fräswerkzeugs 5B verläuft vorzugsweise quer oder senkrecht zur axialen Richtung der Dreh- bzw, Rundachse C der Werkstückspindel 3A. Das Fräswerkzeug 5B kann je nach Bedarf und Ausführung mit seiner Ausrichtung der Drehachse auch schräg geneigt zur axialen Richtung der Dreh- bzw. Rundachse C der Werkstückspindel 3A ausgerichtet oder schwenkbar sein und/oder relativ zur Linse 2, beispielsweise durch entsprechendes Bewegen der Werkstückspindel 3A und/oder des Antriebs 3D bzw. Fräswerkzeugs 5B, zugestellt werden.

Im dargestellten und bevorzugten Ausführungsbeispiel erfolgt vorzugsweise eine zwei- oder mehrstufige Bearbeitung, insbesondere ist die Bearbeitungseinrichtung 3 vorzugsweise zweistufig ausgeführt mit einem gröber arbeitenden Fräswerkzeug 5B zur gröberen Bearbeitung (Vorbearbeitung) und einem feiner arbeitenden Drehwerkzeug 5A zur feineren Bearbeitung (Feinbearbeitung bzw. Hauptbearbeitung). Bei Bedarf kann die Bearbeitung durch Fräsen jedoch auch ganz entfallen. Dies führt zu einer Vereinfachung der Vorrichtung 1 bzw. Bearbeitungseinrichtung 3 und gestattet einen kompakteren und/oder kostengünstigeren Aufbau. Bedarfsweise kann das Drehen in zwei Schritten, wie einem gröberen Vordrehen und späterem Feindrehen, vorzugsweise mit demselben Drehwerkzeug 5A gegebenenfalls aber auch mit unterschiedlichen Drehwerkzeugen, erfolgen.

Insbesondere kann beispielsweise in der Bearbeitungseinrichtung 3 eine Bearbeitung erfolgen bzw. ein Aufbau vorgesehen sein, wie in der EP 0 849 038 A2 oder DE 10 2009 011 194 A2 beispielsweise beschrieben.

Die spanende bzw, formgebende Bearbeitung erfolgt vorzugsweise unter Zugabe von Flüssigkeit, wie einer Kühlemulsion o. dgl,

Die Vorrichtung 1 weist alternativ oder zusätzlich zur Bearbeitungseinrichtung 3 vorzugsweise eine Poliereinrichtung 4 zum Polieren bzw. Endbearbeiten der vorzugsweise zuvor in der Bearbeitungseinrichtung 3 bearbeiteten Linse 2 bzw. dieses Linsenrohlings auf. Die Poliereinrichtung 4 stellt insbesondere eine (weitere) Bearbeitungseinrichtung im Sinne der vorliegenden Erfmdung dar und ist im in Fig. 1 dargestellten Ausführungsbeispiel vorzugsweise benachbart zu und/oder seitlich neben der (anderen) Bearbeitungseinrichtung 3 angeordnet,

Die Poliereinrichtung 4 kann ein gemeinsames Gehäuse mit der Bearbeitungseinrichtung 3 oder ein davon getrenntes Gehäuse aufweisen,

Die Poliereinrichtung 4 ist besonders bevorzugt wie in der DE 10 2007 042 667 A1 beschrieben aufgebaut oder ausgebildet, wobei die Poliereinrichtung 4 gemäß der vorliegenden Erfindung bedarfsweise auch nur zur Bearbeitung einer Linse 2 und nicht zur simultanen Bearbeitung von zwei Linsen 2 ausgebildet sein kann, insbesondere also nur einen Antrieb zum Rotieren der Linse 2 aufweisen kann.

Die Poliereinrichtung 4 weist beim Darstellungsbeispiel vorzugsweise eine Werkstückspindel 4A mit einer Aufnahme 4B auf. Die Werkstückspindel 4A kann grundsätzlich ähnlich oder baugleich wie die Werkstückspindel 3A in der Bearbeitungseinrichtung 3 aufgebaut und/oder in X-Richtung (Quervorschub) verfahrbar und/oder wie durch Pfeil S angedeutet schwenkbar sein. Ergänzend wird daher auf die Beschreibung zur Werkstückspindel 3A verwiesen. Insbesondere dient die Werkstückspindel 4A ebenso als Antrieb, um die Linse 2 in Rotation für die Bearbeitung, hier das Polieren, zu versetzen, und/oder dient der Zustellung der Linse 2 zu einem Bearbeitungswerkzeug 5, hier einem Polierwerkzeug 5C. Insbesondere handelt es sich bei der Werkstückspindel 4A um einen einfachen Drehantrieb, beispielsweise einen Motor mit einem Riemenantrieb, um die Linse 2 in Rotation für die Bearbeitung bzw. das Polieren zu versetzen. Besonders bevorzugt wird die Linse 2 bzw. das Blockstück 2A ohne definierte Drehlage aufgenommen und/oder lediglich mit einer konstanten (je nach Bedarf gegebenenfalls gesteuerten oder geregelten) Drehzahl rotiert.

Das Polieren kann grundsätzlich auch erst nach dem Abblocken, also nach einem Lösen der Linse 2 vom zugeordneten Blockstück 2A erfolgen. In diesem Fall wird die Linse 2 vorzugsweise direkt eingespannt oder beispielsweise durch Unterdruck gehalten.

Das Einspannen der Linse 2 bzw. des Blockstücks 2A in die Werkstückspindel 4A bzw. deren Aufnahme 4B erfolgt vorzugsweise wiederum von Hand, also manuell von einem nicht dargestellten Bediener. Dementsprechend erfolgt vorzugsweise auch ein manuelles Umspannen von der Werkstückspindel 3A zur Werkstückspindel 4A. Dieses Umspannen kann, insbesondere ebenso wie das Einspannen an sich, grundsätzlich auch automatisiert bzw. selbsttätig mittels einer entsprechenden Manipulier- bzw. Spanneinrichtung durch die Vorrichtung 1 erfolgen.

Die separaten Antriebe bzw. Werkstückspindeln 3A und 4A und/oder Auf nahmen 3B und 4B für die Bearbeitungseinrichtung 3 einerseits und die Poliereinrichtung 4 andererseits ermöglichen eine unabhängige Bearbeitung (das Polieren wird auch als Bearbeiten, insbesondere als geometrische bzw. mechanische Endbearbeitung einer Fläche, verstanden) in den beiden Einrichtungen 3 und 4, so dass der Durchsatz der Vorrichtung 1 an bearbeiteten Linsen 2 entsprechend höher ist verglichen mit einer gemeinsamen Werkstückspindel für beide Einrichtungen 3 und 4, Jedoch kann grundsätzlich an Stelle der separaten bzw. zusätzlichen Werkstückspindel 4A für die Poliereinrichtung 4 lediglich eine bzw. die Werkstückspindel 3A gemeinsam für beide Einrichtungen 3 und 4 eingesetzt werden. Bedarfsweise kann das Polieren in der Poliereinrichtung 4 auch simultan für mehrere Linsen 2 gleichzeitig und/oder in mehreren Bearbeitungsschritten erfolgen.

Vorzugsweise weist die Poliereinrichtung 4 mindestens einen Polierantrieb 4C mit mindestens einem zugeordneten Polierwerkzeug 5C als Bearbeitungswerkzeug 5 auf. Der Polierantrieb 4C kann das Polienverkzeug 5C insbesondere in Drehung versetzen, wie durch Pfeil B angedeutet.

Besonders bevorzugt ist das Polierwerkzeug 5C insbesondere mit einer vorbestimmten Kraft gegen die zu bearbeitende Linse 2 bzw. das Werkstück drückbar bzw. anstellbar, hier beim Darstellungsbeispiel in Z-Richtung. Das Andrücken bzw. Anstellen kann beispielsweise pneumatisch, durch Federkraft oder auf sonstige geeignete Art und Weise erfolgen.

Zusätzlich oder alternativ kann der Polierantrieb 4C bzw. das Polierwerkzeug 5C bedarfsweise auch in X-Richtung bewegbar bzw. verschiebbar sein, insbesondere also eine gesteuerte X-Achse bilden oder aufweisen, insbesondere zur Relativverstellung (Quervorschub) relativ zum Werkstück bzw, zur Linse 2.

Zusätzlich oder alternativ zu der möglichen Schwenkbewegung S des Werkstückantriebs bzw. des Werkstücks kann sich das Polierwerkzeug 5C vorzugsweise über ein entsprechendes Gelenk, wie ein Kugelgelenk oder Kardangelenk, in seiner Neigung gelenkig an die Oberfläche der zu bearbeitenden Linse 2 anpassen.

Dargestellt ist ein einziger Polierantrieb 4C mit einem einzigen Polierwerkzeug 5C. Selbstverständlich können auch mehrere Antriebe und/oder Werkzeuge zum Einsatz kommen. Insbesondere kann der Polierantrieb 4C auch mehrachsig ausgebildet oder gelagert sein. Beispielsweise kann die Poliereinrichtung 4 aufgebaut sein oder arbeiten, wie in der DE 10 2007 042 667 A1 beschrieben.

Das Polieren erfolgt vorzugsweise durch Läppen, insbesondere also unter Einsatz einer entsprechende Reibkörper enthaltenden Flüssigkeit, wie einer sogenannten Poliermilch o. dgl. Alternativ oder zusätzlich kann das Polieren auch durch Feinschleifen erfolgen. Insbesondere kann anstelle des Läppens auch nur ein reines Feinschleifen zur Endbearbeitung der Linse 2 insbesondere vor einer anschließenden Beschichtung der Linse 2 erfolgen.

Grundsätzlich können Werkstück und Werkzeug bei den beschriebenen Bearbeitungen, insbesondere bei der spanenden bzw. formgebenden Bearbeitung und/oder bei dem Polieren, auch vertauscht bzw. kann eine kinematische Umkehr vorgesehen werden.

Die Vorrichtung 1 weist vorzugsweise eine Wechseleinrichtung 6 zum Wechseln vonBearbeitungswerkzeugen 5, insbesondere des Polierwerkzeugs 5C bzw. der Polierwerkzeuge 5C, auf, wie in Fig. 1 schematisch angedeutet. Dies erleichtert ein zumindest weitgehend automatisiertes Bearbeiten, insbesondere Polieren, der Linse 2,

Die Vorrichtung 1 weist vorzugsweise eine Steuereinrichtung 7 zum Steuern der Bearbeitung der Linse 2 bzw. der Bearbeitungseinrichtung 3 und/oder der Poliereinrichtung 4 auf. Die Steuereinrichtung 7 ist in Fig. lschematisch angedeutet.

Es ist anzumerken, dass die Steuereinrichtung 7 durch eine speicherprogrammierbare Steuerung, CNC-Steuerung (numerische bzw. rechnergestüzte Steuerung) o. dgl. gebildet sein oder enthalten kann und/oder eine derartige Steuerung steuern kann. Die Steuereinrichtung 7 bzw, Teile der Steuerung können auch für die Einrichtungen 3, 4, 6, 10 beliebig zusammengefasst und/oder beliebig auf die Einrichtungen 3, 4, 6 und/oder 10 verteilt oder nur von diesen gebildet sein.

Die Steuereinrichtung 7 ist eingangsseitig vorzugsweise mit einer Eingabeeinrichtung 8 der Vorrichtung 1 versehen bzw. verbunden.

Die Eingabeeinrichtung 8 weist im Ausführungsbeispiel vorzugsweise ein Bedienfeld 8A zur manuellen Eingabe und/oder eine Anzeigeeinrichtung 8B, hier in Form eines Bildschirms, insbesondere zur Benutzerführung, auf, Die Eingabeeinrichtung 8 kann bedarfsweise auch einen Touch-Screen alternativ oder zusätzlich zu dem Bedienfeld 8A aufweisen. Dieser Touch-Screen kann bedarfsweise durch die Anzeigeinrichtung 8B und/oder einen zusätzlichen Bildschirm gebildet sein.

Die Anzeigeeinrichtung 8B dient vorzugsweise der Benutzerführung zur (leichten) Bedienung der Vorrichtung 1. Besonders bevorzugt weist die Vorrichtung 1 nur eine einzige Anzeigeeinrichtung 8B oder nur einen einzigen Bildschirm auf, um einen einfachen, kostengünstigen Aufbau zu ermöglichen und/oder eine besonders einfache Bedienung, auch durch zumindest weitgehend ungeschultes Personal zu ermöglichen oder erleichtern.

Bei der Anzeigeeinrichtung 8B kann es sich bevorzugt um ein Dialogfeld handeln, insbesondere um einen Touch-Screen. Dann ist faktisch das Bedienfeld 8A, das in Fig. 1 als Tastatur angedeutet ist, in den Bildschirm 8B integriert. Selbstverständlich ist auch eine eher traditionelle Ausstattung mit einer Tastatur als Bedienfeld 8A ebenfalls möglich.

In die Vorrichtung 1 bzw. Steuereinrichtung 7 kann ferner eine nicht dargestellte Benutzerführeinrichtung integriert sein, die dann insbesondere über die Anzeigeeinrichtung 8B der Eingabeeinrichtung 8 die Rückkopplung an den Benutzer bzw. Bediener bzw. die Benutzerführung ermöglicht.

Das dargestellte und bevorzugte Ausführungsbeispiel zeigt die Vorrichtung 1 als kompaktes Bearbeitungszentrum, hier und nach bevorzugter Lehre in oder mit einem gemeinsamen Gestell oder Gehäuse 9, Dadurch ist die erfindunggemäße Vorrichtung 1 an einer passenden Stelle vorzugsweise komplett mit allen Einrichtungen installierbar. Insbesondere handelt es sich hier um eine kompakte Vorrichtung 1 in Form eines an jedem beliebigen Ort aufstellbaren Bearbeitungszentrums.

Der Vorrichtung 1 ist vorzugsweise eine Aufnahmeeinrichtung 10 zur Aufnahme von Betriebsmitteln, insbesondere Linsen 2 und/oder Werkzeugen 5, zugeordnet. Die Aufnahmeeinrichtung 10 kann auch einen Teil der Vorrichtung 1 bilden bzw. fest mit dieser bzw, dem Gestell oder Gehäuse 9 der Vorrichtung 1 verbunden sein. Es kann sich jedoch auch um eine von der Vorrichtung 2 separate oder trennbare Einrichtung handeln.

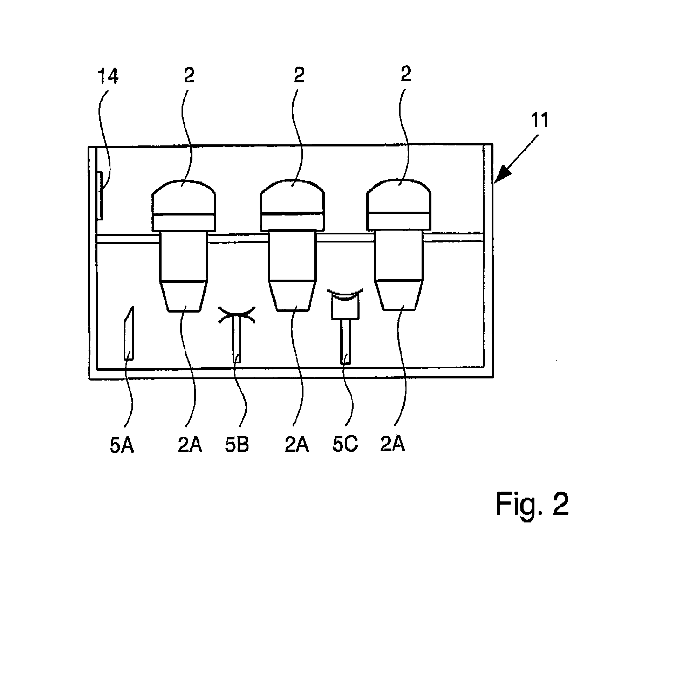

Die Aufnahmevorrichtung 10 kann beispielsweise zur Aufnahme eines Transportbehältnisses 11 ausgebildet sein, das in einem schematischen Schnitt beispielhaft in Fig. 2 dargestellt ist. Dieses Transportbehältnis 11 ist dann vorzugsweise seinerseits vorzugsweise zur Aufnahme oder Bereitstellung von insbesondere geblockten Linsen 2 und/oder Bearbeitungswerkzeugen 5, wie Drehwerkzeugen 5A, Fräswerkzeugen 5B und/oder Polierwerkzeugen 5C, ausgebildet.

Das Transportbehältnis 11 kann beispielsweise verschiedene Werkzeuge 5 für verschiedene Bearbeitungen oder Linsen 2 und/oder Werkzeuge 5 zum Ersatz, und/oder sonstige Betriebsmittel, wie Kühlmittel, Poliermittel, Beschichtungsmittel, Reinigungsmittel, Blockmaterial oder dgl., und/oder sonstige Hilfsmittel, wie Handschuhe, Putztücher oder dgl., enthalten oder aufnehmen.

Besonders bevorzugt handelt es sich bei dem Transportbehältnis 11 um ein Behältnis, das den Benutzer bzw. die Vorrichtung 1 insbesondere mit allen für die Bearbeitung erforderlichen Linsenrohlingen, Materialien und/oder Informationen oder dgl. versorgt.

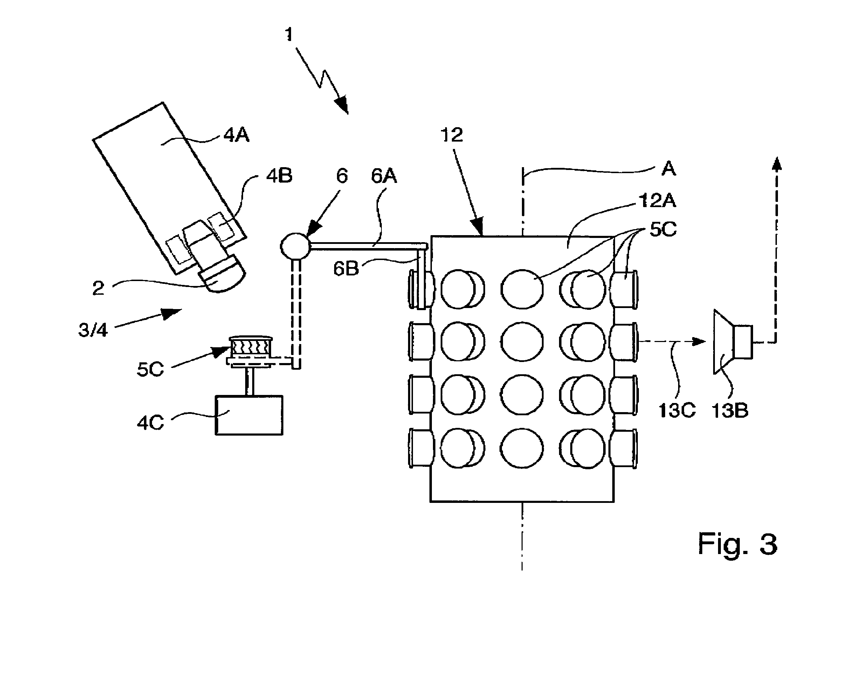

Die Aufnahmeeinrichtung 10 kann jedoch auch als ein Magazin 12 zur Auf nahme bzw. Bereitstellung von Werkzeugen 5, insbesondere Polierwerkzeugen 5C, wie insbesondere in der schematischen Darstellung gemäß Fig. 3 angedeutet, ausgebildet oder ausgeführt sein oder ein solches Magazin 12 aufweisen oder zur Aufnahme eines solchen Magazins 12 ausgebildet sein. Das Magazin 12 kann aber auch in sonstiger Weise der Vorrichtung 1 zugeordnet sein und/oder einen Teil oder eine Einrichtung der Vorrichtung 1 bilden.

Die Aufnahmeeinrichtung 10 bzw. das Magazin 12 weist vorzugsweise einen insbesondere zumindest im Wesentlichen zylindrischen Magazinkörper 12A zur lösbaren Halterung der Werkzeuge 5, insbesondere Polierwerkzeuge 5C. Insbesondere sind die Werkzeuge 5 an bestimmten Lagerplätzen steckend oder klemmend befestigbar.

Beim Darstellungsbeispiel sind die Werkzeuge 5 bzw. deren Lagerplätze über den Umfang und/oder axial am Magazin 12 bzw. Magazinkörper 12A verteilt angeordnet. Mit anderen Worten, das Magazin bzw. der Magazinkörper 12A weist vorzugsweise definierte bzw. entsprechend angeordnete Aufnahmemittel, Halterungen o.dgl. an bestimmten Lagerplätzen auf.

Beim Darstellungsbeispiel ist das Magazin bzw. der Magazinkörper 12A vorzugsweise drehbar, hier im die angedeutete Achse A. Insbesondere handelt es sich hier um die Zylinderachse oder eine Rotationsachse des Magazinkörpers 12.

Beim Darstellungsbeispiel dient die optionale Wechseleinrichtung 6 vorzugsweise einem automatisierten Wechsel der Werkzeuge 5 bzw. Polierwerkzeuge 5C.

Die Wechseleinrichtung 6 weist vorzugsweise einen insbesondere auch mehrgelenkigen Arm 6A und/oder einen Greifer 6B auf. Wie in der schematischen Darstellung gemäß Fig, 3 angedeutet, kann die Wechseleinrichtung 6 bzw. der Greifer 6B ein Werkzeug 5 bzw, Polierwerkzeug 5C aus der Aufnahmeeinrichtung 10 bzw. dem Magazin 12 greifen und die zugeordnete Bearbeitungseinrichtung, hier die Poliereinrichtung 4 bzw. deren Antrieb 4C o.dgl., damit bestücken, wie in Fig. 3 gestrichelt angedeutet.

Die Wechseleinrichtung 6 kann vorzugsweise nicht mehr benötigte bzw, bereits benutzte oder verbrauchte Werkzeuge 5 der zugeordneten Bearbeitungseinrichtung, hier der Poliereinrichtung 4, entnehmen und insbesondere wieder der Aufnahmeeinrichtung 10 bzw. dem Magazin 12 zuführen, insbesondere am Magazinkörper 12A ablegen oder anbringen, beispielsweise durch Klemmen oder Einrasten an einem entsprechenden Lagerplatz.

Besonders bevorzugt wird für ein Werkzeug 5 bzw. Polierwerkzeug 5C immer der selbe Lagerplatz verwendet.

Zur Erleichterung bzw. Beschleunigung des Werkzeugswechsels kann die Wechseleinrichtung 6 bzw. der Greifer 6B auch derart ausgebildet sein, dass zwei Werkzeuge 5 gegriffen werden können, beispielsweise ein gebrauchtes und ein neues Werkzeug 5.

Wie bereits erwähnt, ist die Wechseleinrichtung 6 bzw. das automatisiert Wechseln von Werkzeugen 5, insbesondere Polierwerkzeugen 5C, optional. Grundsätzlich kann auch ein manuelles Wechseln oder sonstiges Wechseln erfolgen.

Die Vorrichtung 1 weist vorzugsweise eine Erfassungseinrichtung 13 zum Erfassen mindestens eines (beispielsweise vorhandenen oder fehlenden oder auszutauschenden) Betriebsmittels, insbesondere von Informationen bezüglich des Betriebsmittels oder Werkzeugs 5, insbesondere von einem die Informationen enthaltenden Informationsträger 14, der dem Betriebsmittel zugeordnet ist, auf

Die Erfassungseinrichtung 13 kann in die Eingabeeinrichtung 8 integriert oder von dieser gebildet sein, Vorzugsweise handelt es sich bei der Erfassungseinrichtung 13 jedoch um eine separate Einrichtung, die besonders bevorzugt aber wiederum in die Vorrichtung 1 integriert oder fest mit dieser verbunden und/oder insbesondere fest an diese angeschlossen oder anschließbar ist,

Die Vorrichtung 1 bzw. Erfassungseinrichtung 13 weist vorzugsweise eine Detektionseinrichtung 13A und/oder 13B zum Erfassen der Werkzeuge 5 bzw. der Informationen auf. Beispielsweise kann diese einen Lesekopf, einen Sensor, eine Kamera o.dgl. aufweisen oder dadurch gebildet sein.

Die Detektionseinrichtung 13A ist vorzugsweise in die Vorrichtung 1 oder Erfassungseinrichtung 13 integriert oder fest mit dieser verbunden und/oder insbesondere fest an diese angeschlossen oder anschließbar.

Die Erfässungseinrirhtung 13 bzw. Detektionseinrichtung 13A bzw. 13B ist insbesondere derart ausgebildet, dass die Informationen optisch, magnetisch, elektromagnetisch und/oder auf sonstige geeignete Art und Weise erfasst, ausgelesen und/oder detektiert werden können und/oder das Auslesen des Informationsträgers 14 auf diese Weise erfolgt. Die von der Detektionseinrichtung 13A bzw. 13B detektierten bzw. erfassten Informationen und Daten werden beispielsweise von der Erfassungseinrichtung 13 verarbeitet, insbesondere dahingehend, dass die Informationen ausgegeben und insbesondere an die Vorrichtung 1 bzw. die Steuereinrichtung 7 oder sonstige Komponenten oder Einrichtungen weitergeleitet werden. Insbesondere kann die Erfassungseinrichtung 13 die Detektionseinrichtung 13A und/oder 13B in geeigneter Weise steuern.

Die Erfassungseinrichtung 13 bzw, Detektionseinrichtung 13A bzw. 13B kann separat von den anderen Einrichtungen der Vorrichtung 1 angeordnet oder einer Einrichtung, insbesondere der Bearbeitungseinrichtung 3, oder einer Auf nahme 3B bzw. 4B, oder besonders bevorzugt dem Magazin 12 zugeordnet oder daran bzw. darin angeordnet sein.

Insbesondere ist die Vorrichtung 1 bzw. die Erfassungseinrichtung 13 bzw. die Detektionseinrichtung 13A bzw. 13B derart ausgebildet, dass die Informationen selbsttätig oder automatisiert erfasst bzw. gelesen werden können,

Bei Bedarf kann die Vorrichtung 1 auch mehrere Detektionseinrichtungen 13A und/oder 13B aufweisen, die beispielsweise verschiedenen Einrichtungen 3, 4, 6 und/oder 10 der Vorrichtung 1 zugeordnet sind, insbesondere um anhand der dann jeweils erfassten bzw. detektierten Informationen überprüfen oder verifizieren zu können, dass die richtige Bearbeitung bzw. Behandlung erfolgt.

Die Informationen im Sinne der vorliegenden Erfindung betreffen insbesondere mindestens ein Betriebsmittel bzw. mehrere oder alle Betriebsmittel zum Bearbeiten der Linse 2, insbesondere für eine bestimmte Bearbeitung oder für bestimmte Linse 2 und/oder zum Betreiben der Vorrichtung 1.

Ein "Betriebsmittel" im Sinne der vorliegenden Erfindung ist oder umfasst insbesondere ein Werkzeug 5, wie das Drehwerkzeug 5A, das Fräswerkzeug 5B und/oder das Polierwerkzeug 5C oder dgl., und/oder ein Poliermittel, ein Kühlmittel, ein Schmiermittel, ein Reinigungsmittel und/oder eine Flüssigkeit oder dgl.

Die Informationen können auch eine Identifikation eines Betriebsmittels und/oder den Füllstand eines Betriebsmittels, das Vorhandensein eines Betriebsmittels, den Zustand eines Betriebsmittels oder dgl. betreffen oder umfassen,

Vorzugsweise können die mindestens ein Betriebsmittel betreffenden Informationen von der Vorrichtung 1 bzw. deren Erfassungseinrichtung 13 (ebenfalls) erfasst werden, insbesondere zumindest teilweise selbsttätig und/oder durch entsprechende Eingabe, beispielsweise über die zugeordnete Eingabeeinrichtung 8. Besonders bevorzugt weist die Vorrichtung 1 bzw. Erfassungseinrichtung 13 hierzu mindestens eine, vorzugsweise mehrere entsprechende Detektionseinrichtungen 13B auf, wie in Fig. 1 schematisch angedeutet, auf.

Die Vorrichtung 1 bzw. Erfassungseinrichtung 13 kann die Detektionseinrichtungen 13B zur Betriebsmittelerfassung und/oder -überwachung zusätzlich oder alternativ zu der der vorzugsweise der Linse 2 zugeordneten Detektionseinrichtung 13A aufweisen.

Die Detektionseinrichtungen 13D können, insbesondere ebenso wie die Detektionseinrichtung 13A, fest mit der Vorrichtung 1 oder deren Gehäuse 9 verbunden oder darin integriert sein und/oder fest oder lösbar an die Vorrichtung 1, Steuereinrichtung 7 und/oder Erfassungseinrichtung 13 angeschlossen oder anschließbar sein und/oder drahtlos oder per Funk entsprechende Daten bzw, Informationen, insbesondere an die Vorrichtung 1, Steuereinrichtung 7 und/oder Erfassungseinrichtung 12, übertragen, wie beispielhaft durch die gestrichelten Linien in Fig. 1 angedeutet.

Bei den Detektionseinrichtungen 13A und/oder 13B handelt es sich insbesondere um entsprechende Sensoren, Sensoreinrichtungen, optische Einrichtungen, Kameras, Füllstandsmesser, Näherungsschalter, Mikroschalter oder dgl. Bedarfsweise können auch mehrere oder unterschiedliche Detektionseinrichtungen 13B kombiniert werden und/oder der Erfassung von Informationen bezüglich eines Betriebsmittels dienen.

Vorzugsweise sind einige oder alle Detektionseinrichtungen 13B in der Nähe des jeweils zu überwachenden oder zu erfassenden Betriebsmittels bzw. dem jeweiligen Einbauzustand oder Verwendungsort des Betriebsmittels in der Vorrichtung 1 angeordnet und/oder den jeweiligen Bearbeitungseinrichtungen 3 und/oder 4 bzw. sonstigen Einrichtungen, wie der Aufnahmeeinrichtung 10, dem Transportbehältnis 11 und/oder dem Magazin 12 zugeordnet.

Beispielsweise kann eine Detektionseinrichtung 13B der Bearbeitungseinrichtung 3 bzw. dem Antrieb 3C, hier dem Fast-Tool-Antrieb, bzw. dem Drehwerkzeug 5A zugeordnet sein, insbesondere um das eingebaute Bearbeitungswerkzeug 5, hier das Drehwerkzeug 5A, und/oder dessen Typ, Größe, Zustand, Abnutzung oder dgl. - ggf. auch fortlaufend - zu überwachen und/oder zu erfassen.

Beispielsweise kann eine Detektionseinrichtung 13B der Bearbeitungseinrichtung 3 bzw, dem Antrieb 3D zugeordnet sein, insbesondere um das eingebaute Bearbeitungswerkzeug 5, hier das Fräswerkzeug 5B, und/oder dessen Typ, Größe, Zustand, Abnutzung oder dgl. - ggf. auch fortlaufend - zu überwachen und/oder zu erfassen.

Beispielsweise kann eine Detektionseinrichtung 13B der Poliereinrichtung 4 bzw. dem Antrieb 4C zugeordnet sein, insbesondere um das angebaute Polierwerkzeug 5C, beispielsweise dessen Typ, Größe, Zustand, Abnutzung oder dgl., - ggf. auch fortlaufend - zu überwachen und/oder zu erfassen. Alternativ oder zusätzlich kann diese Überwachung oder Erfassung auch am Magazin 12 erfolgen, insbesondere durch eine dem Magazin 12 zugeordnete Detektionseinrichtung 13B, wie in Fig. 3 angedeutet, insbesondere um das Vorhandensein, den Zustand und/oder die Art, Größe oder dgl. von Werkzeugen 5 und/oder sonstiger Betriebsmittel - ggf. auch fortlaufend - zu erfassen und/oder zu überwachen.

Alternativ oder zusätzlich kann auch der Aufahmeeinrichtung 10 eine Detektionseinrichtung 13B zugeordnet sein, wie in Fig. 1 angedeutet, insbesondere um das Vorhandensein und/oder die Art, Größe oder dgl. aufgenommener Betriebsmittel und/oder das Vorhandensein bzw. den Typ eines darin aufgenommenen Transportbehältnisses 11 bzw. von in dem Transportbehältnis 11 enthaltener Betriebsmittel - ggf auch fortlaufend - zu erfassen und/oder zu überwachen.

Die erfassten bzw. detektierten Informationen, insbesondere bezüglich der Betriebsmittel, können von der Vorrichtung 1, Erfassungseinrichtung 13 und/oder Steuereinrichtung 7 verwendet, weiter verarbeitet und/oder ausgewertet und/oder - insbesondere über die Anzeigeeinrichtung 8 - angezeigt oder auf sonstige Art und Weise ausgegeben oder protokolliert werden, vorzugsweise zusammen mit durchgeführten Linsenbearbeitungen.

Bei Bedarf können die vorzugsweise selbsttätig erfassten oder detektierten Informationen generell auch korrigiert werden, insbesondere mittels der Eingabeeinrichtung 8A oder auf sonstige geeignete Art und Weise.

Die - insbesondere ein Werkzeug 5 betreffenden - Informationen oder ein damit versehener Informationsträger 14 sind bzw. ist dem Werkzeug 5 gemäß einer bevorzugten Ausgestaltung jeweils zugeordnet, insbesondere daran angeordnet oder darauf aufgebracht oder darin integriert.

Bei dem Informationsträger 14 handelt es sich insbesondere um einen RFID-Chip oder -Transponder, eine mechanische und/oder optische Kennzeichnung, insbesondere einen Barcode, besonders bevorzugt einen zweidimensionalen Barcode, eine sonstige Kennzeichnung, ein sonstiges Identifikationsmittel o.dgl.

Der Informationsträger 14 enthält die Informationen je nach Bedarf in kodierter oder unkodierter Form. Insbesondere enthalten die Informationen eine Identifikation des jeweiligen Werkzeugs 5.

Die - insbesondere das Werkzeug 5 betreffenden - Informationen bzw. Daten, die diese Informationen enthalten, werden vorzugsweise von der Erfassungseinrichtung 13 bzw. Detektionseinrichtung 13B erfasst oder ausgelesen, insbesondere über einen entsprechenden Signalaustausch, bzw. ein Detektionssignal 13C, wie schematisch in Fig. 3 angedeutet. Dies erfolgt hier insbesondere optisch. Diese Daten - insbesondere Bilddaten und/oder Filmdaten, vorzugsweise von einer Kamera o.dgl. als Detektionseinrichtung 13 B - werden dann vorzugsweise in der Vorrichtung 1 bzw. Erfassungseinrichtung 13 insbesondere hinsichtlich der Informationen ausgewertet und insbesondere zur Weiterverarbeitung bzw. für den weiteren Betrieb oder Ablauf der Vorrichtung 1 bzw. für andere Komponenten oder Einrichtungen der Vorrichtung 1, z.B. der Steuereinrichtung 7, zur Verfügung gestellt.

Das vorgenannte Detektieren, Lesen bzw. Erfassen der Daten von dem Informationsträger 14 erfolgt insbesondere optisch, durch Funk, magnetisch, elektromagnetisch und/oder auf sonstige geeignete Art und Weise. Beispielsweise wird ein RFID-Chip oder -Transponder als Informationsträger 14 per Funk bzw. über ein RFID-Signal ausgelesen. Beispielsweise wird eine optische Kennzeichnung oder ein Barcode als Informationsträger 14 optisch erfasst oder gescannt. Beispielsweise kann es sich bei dem Informationsträger 14 auch um einen sonstigen Chip oder Mikrochip, insbesondere um einen EPROM oder EEPROM, und/oder um einen magnetischen Datenspeicher oder dgl. handeln. Die Vorrichtung 1 bzw. Erfassungseinrichtung 13 bzw. Detektionseinrichtung 13A/13B ist dementsprechend ausgebildet, beispielsweise mit einem entsprechenden RFID-Empfänger oder Abfragegerät, einer Kamera, einem sonstigen Sensor o.dgl. versehen.

Einzelne Betriebsmittel, insbesondere einzelne oder alle Werkzeuge, können mit den entsprechenden Informationen bzw, einem entsprechenden Informationsträger 14, insbesondere einem Barcode, versehen sein.

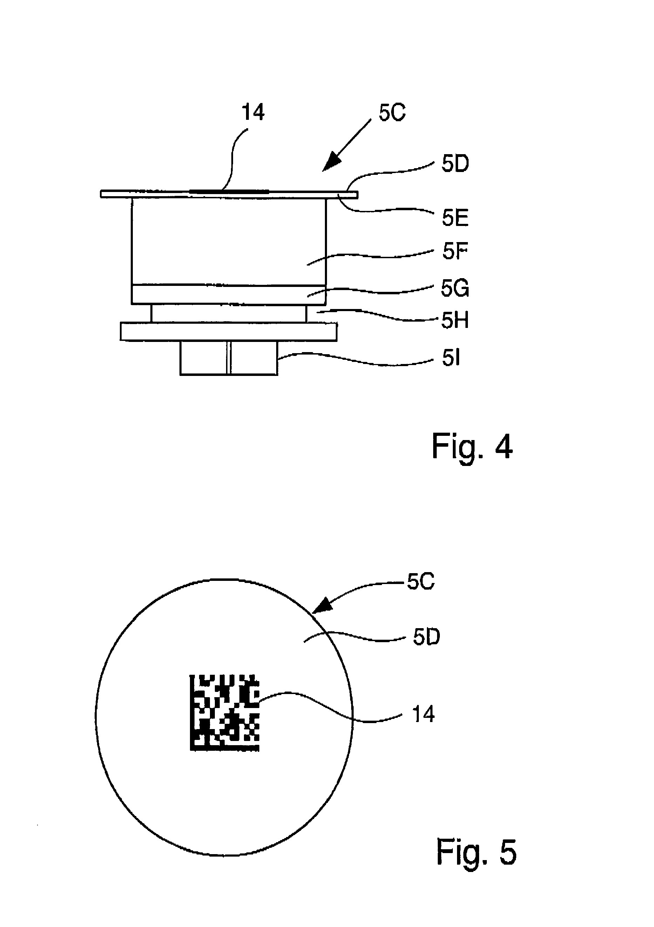

Fig. 4 zeigt in einer schematischen Seitenansicht ein vorschlagsgemäßes Werkzeug 5, dass insbesondere als Polierwerkzeug 5C ausgeführt oder ausgebildet ist.

Das Werkzeug 5 bzw. Polierwerkzeug 5C weist vorzugsweise eine Arbeitsfläche 5D auf, die bei der Bearbeitung mit der Linse 2 bzw. im sonstigen optischen Bauteil in Kontakt kommt und insbesondere dabei abgearbeitet bzw. abgetragen wird oder verschleißt.

Beim Darstellungsbeispiel ist die Arbeitsfläche 5D auf einer Seite, insbesondere Flachseite, des Werkzeugs 5 oder eines insbesondere flächigen Werkzeugelements, wie eines Polierpads 5E, angeordnet oder gebildet. Bei dem Bearbeitungs- bzw. Werkzeugelement oder Polierpad 5E des Werkzeugs 5 handelt es sich insbesondere um ein vlies-, -folien, filz- oder gewebeartiges Element oder Flächengebilde o.dgl.

Beim Darstellungsbeispiel weist das Werkzeug 5 bzw. Polierwerkzeug 5C vorzugsweise einen Verbindungskörper 5F auf, der das Bearbeitungselement bzw. Polierpad 5E vorzugsweise rückseitig und/oder großflächig hält oder abstützt.

Der Verbindungskörper 5F ist vorzugsweise schaumartig oder elastisch nachgiebig ausgebildet und/oder aus Kunststoff hergestellt.

Der Verbindungskörper 5F ist vorzugsweise seinerseits an einem Haltekörper 5G des Werkzeugs 5 bzw. Polierwerkzeugs 5C gehalten bzw. befestigt. Beim Darstellungsbeispiel weist der Haltekörper 5G vorzugsweise eine Eingriffsoder Angriffsmöglichkeit, wie eine Nut 5H, insbesondere eine umlaufende Ringnut, zum Erfassen, insbesondere Greifen, des Werkzeugs 5, insbesondere mittels der Wechseleinrichtung 6 bzw. deren Greifer 6B, auf.

Der Haltekörper 5G ist vorzugsweise mit einem Verbindungselement 51 zum lösbarem Verbinden des Werkzeugs 5 bzw, Polierwerkzeug 5C mit einer Bearbeitungseinrichtung, insbesondere einem zugeordneten Antrieb 4C, und/oder dem Magazin 12 o.dgl. versehen, beispielsweise durch eine Klemmoder Schnappverbindung o.dgl.

Das Werkzeug 5 bzw. Polierwerkzeug 5C ist vorzugsweise mit einem Informationsträger 14 im genannten Sinne versehen. Der Informationsträger 14 ist vorzugsweise auf der Arbeitsfläche 5D des Werkzeugs 5 angeordnet, wie in der Draufsicht des Polierwerkzeugs gemäß Fig. 5 gezeigt, besonders bevorzugt auf das Werkzeug 5, die Arbeitsfläche 5D bzw. das Bearbeitungselement oder Polierpad 5E aufgedruckt.

Der Informationsträger 14 bzw. Barcode wird vorzugsweise auf die Arbeitsfläche 5D gedruckt oder in sonstiger geeigneter Weise aufgebracht. Alternativ oder zusätzlich kann die Arbeitsfläche 5D bzw. das Polierpad 5E auch eine Schicht oder Unterlage mit einem bestimmten Muster oder bestimmten Informationen o.dgl. als Informationsträger 14 enthalten.

Bei dem Informationsträger 14 handelt es sich insbesondere um einen sogenannten Barcode (Strichcode), hier besonders bevorzugt um einen zweidimensionalen Barcode.

Der Informationsträger 14 bzw. Barcode ist vorzugsweise mit redundanten Information versehen oder ausgestattet. Beispielsweise können die Informationen oder einzelne Informationen zweifach, dreifach, vierfach oder generell mehrfach vorhanden sein, beispielsweise um bei bereichsweise unleserlichem Informationsträger 14 oder Barcode trotzdem noch ein Erfassen und Auslesen der Informationen in den anderen Bereichen zu ermöglichen. Dies ist insbesondere bei der hier bevorzugten Anordnung auf der Arbeitsfläche 5D bzw, auf einem Werkzeug 5 oder Polierwerkzeug 5C und/oder zur Anzeige des Werkzeugszustands vorgesehen.

Beispielsweise können die Informationen im Informationsträger 14 auch unterschiedlich dargestellt sein oder beispielsweise unterschiedliche Strichbreiten o.dgl aufweisen.

Aus der abnehmenden oder nicht mehr vorhandenen Lesbarkeit oder Erfassbarkeit des Informationsträger 14 oder von Informationen des Informationträgers 14 oder von Bereichen oder Teilen des Informationsträgers 14 wird vorzugsweise die Abnutzung oder der Zustand des Informationsträgers 14 und/oder des Werkzeugs 5 bzw. Polierwerkzeugs 5C bestimmt oder abgeschätzt,

Entsprechendes gilt insbesondere auch, wenn der Informationsträger 14 durch ein bestimmtes oder gleichmäßiges Muster, insbesondere auf der Arbeitsfläche 5D, in einem Bereich oder in mehreren Bereichen oder ganzflächig gebildet ist. Beispielsweise kann der Informationsträger 14 bzw. das davon gebildete Muster o.dgl die Arbeitsfläche 5D zumindest im Wesentlichen vollständig oder vollflächig bedecken.

Alternativ oder zusätzlich können auch mehrere und/oder getrennte und/oder verschiedene Informationsträger 14 am Werkzeug 5 bzw. Polierwerkzeug 5C und insbesondere auf der Arbeitsfläche 5D angeordnet oder verteilt sein.

Bei der in Fig. 3 dargestellten Ausführungsform ist die Erfassungseinrichtung 13 bzw. eine Detektionseinrichtung 13B zur insbesondere optischen Erfassung von Informationen bzw. Informationsträger 14, hier besonders bevorzugt in Form einer Kamera, der Aufnahmeeinrichtung 10 bzw. dem Magazin 12 für die Betriebsmittel bzw. Werkzeuge 5 zugeordnet.

Vorzugsweise ist die Detektionseinrichtung 13B bzw. Kamera relativ zu dem Magazin 12 oder Magazinkörper 12A bzw. zu den verschiedenen Lagerplätzen so bewegbar, hier beispielsweise durch axiale und/oder rotatorische Bewegung, dass die auf den verschiedenen Lagerplätzen befindlichen Werkzeuge 5 bzw. deren Informationsträger 14 erfassbar oder auslesbar sind.

Besonders bevorzugt erfolgt ein anfängliches Auslesen des Informationsträgers 14 zur Identifizierung des zugeordneten Werkzeugs 5 bzw. Polierwerkzeug 5C bei einem erstmaligen Anordnen des Werkzeugs 5 oder Austauschen des Werkzeug 5 gegen ein neues am Magazin 12.

Das jeweils für eine bestimmte Bearbeitung bzw. Linse 2 benötigte Werkzeug 5 wird dann von der Wechseleinrichtung 6 bei Bedarf dem Magazin 12 entnommen und benutzt, insbesondere in einer Bearbeitungseinrichtung bzw. in der Poliereinrichtung 4. Nach der Benutzung wird das Werkzeug 5 wieder an seinen ursprünglichen Lagerplatz am oder im Magazin 12 bzw, auf dem Magazinkörper 12A abgelegt oder angeordnet. Dadurch wird bzw. werden eine eindeutige Identifizierung des jeweiligen Werkzeugs 5 durch die Vorrichtung 1 bzw. Erfassungseinrichtung 13 und/oder der Ablauf insgesamt erleichtert oder vereinfacht.

Nach der erstmaligen Identifikation kann die Erfassungseinrichtung 13 bzw. Detektionseinrichtung 13B weiterhin den Informationsträger 14 des bereits benutzten Werkzeugs 5 auslesen, sofern der Informationsträger 14 oder zumindest Teile davon bzw. die Informationen zumindest noch teilweise auslesbar ist oder sind. Aus dieser Lesbarkeit oder Nichtlesbarkeit kann dann der Zustand (z.B. Verschleiß oder Abnutzungszustand) des Werkzeugs 5 bzw. der Arbeitsfläche 5D erfasst, insbesondere bestimmt oder abgeschätzt, werden. Dieses Bestimmen oder Abschätzen kann beispielsweise in der Erfassungseinrichtung 13 und/oder in sonstigen Einrichtungen, wie der Steuereinrichtung 7 der Vorrichtung 1, erfolgen.

Der erfasste Zustand des Werkzeugs 5 kann vorzugsweise angezeigt, abgerufen, gespeichert und/oder ausgegeben - besonders bevorzugt zusammen mit einer bestimmten Linse 2 und/oder Bearbeitung - werden.

Wenn festgestellt wird, dass das Werkzeug 5 bzw. Polierwerkzeug 5C bzw, dessen Arbeitsfläche 5D (zu weit oder stark) abgearbeitet ist und/oder der Informationsträger 14 und/oder bestimmte Informationen des Informationsträgers 14 nicht mehr oder nur noch schlecht lesbar ist oder sind und/oder wenn eine entsprechende Schwelle der Nichtlesbarkeit oder optischen Erfassbarkeit erreicht oder überschritten wird, kann die weitere Benutzung des entsprechenden Werkzeugs 5 insbesondere von der Vorrichtung 1 bzw. Steuerung 7 gesperrt werden, Alternativ oder zusätzlich kann die weitere Bearbeitung ohne diese Werkzeug 5 erfolgen und/oder ein erforderlicher Austausch dieses Werkzeugs 5 veranlasst und/oder angezeigt werden, insbesondere über die Anzeigeeinrichtung 8B.

Durch die Überwachung des Zustands, Verschleisses bzw. der Abarbeitung des Werkzeugs 5 bzw, Arbeitsfläche 5C kann verhindert werden, dass zu stark abgearbeitete oder verschlissene Werkzeuge 5 für die Bearbeitung noch eingesetzt werden. Dementsprechend kann so die Qualität der Bearbeitung verbessert oder sichergestellt werden.

Die Erfassungseinrichtung 13 bzw. Detektionseinrichtung 13A bzw. 13B bzw. optische Erfassung kann alternativ oder zusätzlich auch dazu verwendet werden, um eventuelle Risse, Ausbrüche oder sonstige Unregelmäßigkeiten oder Beschädigungen des Werkzeugs 5 bzw. der Arbeitsfläche 5D zu erfassen.

Die Erfassungseinrichtung 13 bzw. Detektionseinrichtung 13A bzw. 13B bzw. optische Erfassung kann alternativ oder zusätzlich auch dazu verwendet werden, um eventuell vorhandene Reste von Poliermittel auf dem Werkzeug 5 bzw. auf der Arbeitsfläche 5D oder auf dem Informationsträger 14 zu erfassen. Besonders bevorzugt wird das Erfassen von eingetrocknetem Poliermittel, insbesondere auf der Arbeitsfläche 5D bzw. dem Informationsträger 14, ermöglicht, beispielsweise aufgrund einer entsprechenden Änderung der optischen Eigenschaften. So kann insbesondere verhindert werden, dass ein Werkzeug 5 mit angetrocknetem oder eingetrocknetem Poliermittel für eine weitere Bearbeitung verwendet wird, da dies zu einer ungewollten Beschädigung des Werkstücks bzw. der Linse 2 führen könnte.

Die auslesbaren bzw. erfassbaren Informationen bezüglich des Werkzeugs 5, insbesondere eines Polierwerkzeugs, beinhalten besonders bevorzugt Angaben zu Größe und/oder Durchmesser, insbesondere der Arbeitsfläche 5D bzw. des Polierpads 5E, und/oder bezüglich des effektiven Bearbeitungsdurchmessers oder -bereichs, wie eines bei der Bearbeitung im Wesentlichen wirksamen Ringbereichs oder dergleichen, und/oder bezüglich einer Krümmung oder Vorkrümmung der Arbeitsfläche 5D und/oder bezüglich des Materials des Polierpads 5E.

Alternativ oder zusätzlich kann die Erfassungseinrichtung 13 auch dazu eingesetzt werden, um festzustellen, welche Betriebsmittel bzw. Werkzeuge 5 überhaupt verfügbar sind. Aufgrund dieser Kenntnis kann dann eine optimale Bearbeitung unter Benutzung nur vorhandener Betriebmittel bzw. Werkzeuge 5 - insbesondere von der Vorrichtung 1 bzw. deren Steuerung 7 - festgelegt oder vorgeschlagen werden. Dies kann beispielsweise selbsttätig oder und/oder mit entsprechender Information oder Anzeige für den Benutzer oder Auswahl durch den Benutzer erfolgen.

Zusätzlich oder alternativ zu einer Zuordnung von Informationsträgern 14 zu Betriebsmitteln oder an Werkzeugen 5, kann ein (ggf. zusätzlicher) Informationsträger 14 auch fest oder unlösbar mit Transportbehältnis 11 verbunden sein, wie in Fig. 2 angedeutet. Alternativ kann dieser Informationsträger 14 auch davon lösbar sein und beispielsweise in die Erfassungseinrichtung 13 oder deren Detektionseinrichtung 13A einsteckbar oder daran anschließbar sein, insbesondere zum Auslesen von Informationen.

Das Auslesen der Informationen bzw. des Informationsträgers 14 des Transportbehältnisses 11 kann beispielsweise auch dadurch erfolgen, dass das Transportbehältnis 11 von der Vorrichtung 1 bzw. deren Aufnahmeeinrichtung 10 aufgenommen wird. In diesem Fall kann das Transportbehältnis 11 bzw. der Informationsträger 14 beispielsweise über entsprechende elektrische Anschlüsse o.dgl auslesbar bzw. mit der Vorrichtung 1 bzw. Erfassungseinrichtung 13 bzw. Detektionseinrichtung 13B verbindbar oder daran anschließbar sein.

Der Informationsträger 14 des Transportbehältnisses 11 kann insbesondere auch Informationen bezüglich der Betriebsmittel, die erforderlich und/oder in dem Transportbehältnis 13 enthalten sind, umfassen.

Ein Auslesen der Informationen aus dem Informationsträger 14 des Transportbehältnisses 11 und/oder aus einzelnen Informationsträgern 14 der Betriebsmittel kann besonders bevorzugt über eine dem Transportbehältnis 13 bzw. der Aufnahmeeinrichtung 10 entsprechend zugeordnete Detektionseinrichtung 13B, ggf. sogar automatisiert oder selbsttätig, beispielsweise beim Einsetzen des Transportbehältnisses 11 in die Vorrichtung 1 oder Aufnahmeeinrichtung 10, erfolgen.

Vorzugsweise ist von der Vorrichtung 1 bzw. der Erfassungseinnchtung 13 bzw. der Steuereinrichtung 7 erfassbar, aufnebmbar, feststellbar und/oder auswertbar, welche Betriebsmittel, insbesondere Werkzeuge, zur Verfügung stehen. Dementsprechend können in Abhängigkeit davon - vorzugsweise selbsttätig von der Vorrichtung 1 bzw. der Steuereinrichtung 7 - die konkrete Bearbeitung und/oder der Ablauf festgelegt bestimmt werden, Beispielsweise kann bei Vorhandensein nur eines Drehwerkzeugs 5A bzw. Fehlen eines Fräswerkzeugs 5B eine erste Bearbeitung durch Fräsen entfallen und stattdessen eine ausschließliche Bearbeitung durch Drehen bei der spannenden Bearbeitung der Linse 2 erfolgen.

Es ist anzumerken, dass das Transportbehältnis 11 selbst mit mindestens einer entsprechenden bzw. geeigneten Detektoreinrichtung 13B, wie einem Sensor, Mikroschalter oder dgl., versehen sein kann, um die entsprechenden Informationen, wie das Vorhandensein eines Betriebsmittels, beispielsweise eines entsprechenden Werkzeugs, abfragen oder erfassen zu können. Diese Informationen werden dann beispielsweise drahtlos bzw. per Funk oder kabelgebunden, beispielsweise durch einen entsprechenden elektrischen Anschluss, insbesondere bei Anschließen oder Anbringen des Transportbehältnisses 11 an die Vorrichtung 1 oder die Aufnahmeeinrichtung 10 übertragen oder zur Verfügung gestellt, insbesondere so dass sie von der Erfassungseinrichtung 12 erfasst und von der Vorrichtung 1 weiter verarbeitet bzw. verwendet werden können. Dies erfolgt vorzugsweise selbsttätig bzw. automatisch.

Die Vorrichtung bzw. Benutzerführung ist vorzugsweise zur Anzeige eines erforderlichen Wechsels eines Werkzeugs 5, insbesondere eines Drehwerkzeugs 5A, Fräswerkzeugs 5B und/oder Polierwerkzeugs 5C, ausgebildet. Dies erleichtert die Benutzung bzw. Bedienung wesentlich.

Weiter werden insbesondere alle erforderlichen Betriebsmittel und/oder erforderlichen manuellen Eingriffe, wie Einspannen, Umspannen, Werkzeugwechsel oder dgl., insbesondere angezeigt und/oder - insbesondere von der Vorrichtung 1, Steuereinrichtung 7 und/oder Erfassungseinrichtung 13 bzw. von den Detektionseinrichtungen 13A, 13B - überwacht.

Weiter ist die Benutzerführung vorzugsweise derart ausgebildet, dass der Fortgang des Bearbeitungsprozesses und/oder der Abschluss einzelner Bearbeitungsschritte jeweils angezeigt wird.

### Bezugszeichenliste

- 1: Vorrichtung
- 2: Linse
- 2A: Blockstück
- 3: Bearbeitungseinrichtung
- 3A: Werkstückspindel
- 3B: Aufnahme
- 3C: Antrieb
- 3D: Antrieb
- 4: Poliereinrichtung
- 4A: Werkstückspindel
- 4B: Ausnahme
- 4C: Polierantrieb
- 5: Bearbeitungswerkzeug
- 5A: Drehwerkzeug
- 5B: Fräswerkzeug
- 5C: Polierwerkzeug
- 5D: Arbeitsfläche
- 5E: Polierpad
- 5F: Verbindungskörper
- 5G: Haltekörper
- 5H: Nut
- 5I: Anschlussteil
- 6: Wechseleinrichtung
- 6A: Arm
- 6B: Greifer

- 7: Steuereinrichtung
- 8: Eingabeeinrichtung
- 8A: Bedienfeld
- 8B: Anzeigeeinrichtung
- 9: Gehäuse
- 10: Aufnahmeeinrichtung
- 11: Transportbehältnis
- 12: Magazin
- 12A: Magazinkörper
- 13: Erfassungseinrichtung
- 13A: Detektionseinrichtung
- 13B: Detektionseinrichtung
- 13C: Detektionssignal
- 14: Informationsträger

- A: Achse
- B: Drehung
- C: Rundachse
- S: Schwenkbewegung
- W: Linearachse
- X: Linearachse
- Z: Linearachse

## Patentansprüche

1. Vorrichtung (1) zum Bearbeiten, insbesondere Polieren, einer optischen Linse (2) oder eines sonstigen optischen Bauteils, mit einer Bearbeitungseinrichtung (3) und/oder Poliereinrichtung (4) zum Bearbeiten der Linse (2) bzw. des Bauteils,
**dadurch gekennzeichnet,**
**dass** die Vorrichtung (1) eine Erfassungseinrichtung (13) zum Erfassen mindestens eines Werkzeugs (5) für die Bearbeitung der Linse (2) bzw. des Bauteils aufweist.

2. Vorrichtung nach Anspruch 1, **dadurch gekennzeichnet, dass** das Werkzeug (5) ein Polierwerkzeug (5C) ist.

3. Vorrichtung nach Anspruch 1, **dadurch gekennzeichnet, dass** das Werkzeug (5) gemäß einem der Ansprüche 8 bis 11 ausgebildet ist.

4. Vorrichtung nach einem der voranstehenden Ansprüche, **dadurch gekennzeichnet, dass** die Erfassungseinrichtung (13) zum optischen Erfassen des Werkzeugs (5) und/oder eines Informationsträgers (14) am Werkzeug ausgebildet ist, insbesondere eine Kamera aufweist.

5. Vorrichtung nach einem der voranstehenden Ansprüche, **dadurch gekennzeichnet, dass** die Erfassungseinrichtung (13) einer Aufnahmeeinrichtung (10) und/oder einem Magazin (12), insbesondere mit mehreren Werkzeugen (5), zugeordnet ist.

6. Vorrichtung nach einem der voranstehenden Ansprüche, **dadurch gekennzeichnet, dass** die Erfassungseinrichtung (13) zur Identifikation des Werkzeugs (5), insbesondere an einer bestimmten Position oder Lagerplatz, und/oder zum Erfassen, Identifizieren und/oder Lesen eines Informationsträgers (14) am Werkzeug (5) ausgebildet ist.

7. Vorrichtung nach einem der voranstehenden Ansprüche, **dadurch gekennzeichnet, dass** die Erfassungseinrichtung (13) zur Erfassung eines Zustands des Werkzeugs (5) und/oder eines Informationsträgers (14) am Werkzeug (5) ausgebildet ist.

8. Werkzeug (5) zum Bearbeiten, insbesondere Polieren, einer optischen Linse (2) oder eines sonstigen optischen Bauteils,
**dadurch gekennzeichnet,**
**dass** das Werkzeug (5) einen Informationsträger (14) zur Identifikation und/oder Anzeige des Zustands des Werkzeugs (5) aufweist.

9. Werkzeug nach Anspruch 8, **dadurch gekennzeichnet dass** der Informationsträger (14) ein Barcode ist oder aufweist,

10. Werkzeug nach Anspruch 8 oder 9, **dadurch gekennzeichnet, dass** der Informationsträger (14) zur Anzeige des Zustands des Werkzeugs (5) abarbeitbar ist.

11. Werkzeug nach einem der Ansprüche 8 bis 10, **dadurch gekennzeichnet, dass** der Informationsträger (14) auf einer Arbeitsfläche (5D), insbesondere Polierfläche, des Werkzeugs (5) angeordnet, insbesondere aufgedruckt, ist.

12. Verfahren zum Bearbeiten, insbesondere Polieren, einer optischen Linse (2) oder eines sonstigen optischen Bauteils mittels mindestens eines Werkzeugs (5), wobei ein Informationsträger (14) des Werkzeugs (5) beim Bearbeiten der Linse (2) bzw. des Bauteils abgearbeitet und dadurch der Zustand des Werkzeugs (5) angezeigt wird, und/oder
wobei mehrere Werkzeuge (5) in einem Magazin (12) zur wahlweisen Benutzung bei der Bearbeitung bereitgehalten werden und ein Werkzeug (5) nach der Benutzung beim Bearbeiten wieder an der gleichen Position im Magazin (12) zur Erleichterung der Identifikation des Werkzeugs (5) abgelegt wird.

13. Verfahren nach Anspruch 12, **dadurch gekennzeichnet, dass** der Informationsträger (14) optisch erfasst wird.

14. Verfahren nach Anspruch 12 oder 13, **dadurch gekennzeichnet, dass** ein neues Werkzeug (5) in dem Magazin (12) anfänglich anhand eines Informationsträgers (14) und später nach Benutzung anhand der gleichen Position im Magazin (12) identifiziert wird.

15. Verfahren nach einem der Ansprüche 12 bis 14, **dadurch gekennzeichnet, dass** ein Werkzeug (5) gemäß einem der Ansprüche 8 bis 11 verwendet wird,
